Europäisches Patentamt

European Patent Office

Office européen des brevets

(11) Publication number: **0 106 116**
**B1**

## EUROPEAN PATENT SPECIFICATION

(45) Date of publication of patent specification: 26.04.89

(51) Int. Cl.⁴: **G 02 B 6/38**

(21) Application number: **83108808.3**

(22) Date of filing: **07.09.83**

(54) Arrangement for protecting an optical fiber coupler and a method of manufacturing the same.

(30) Priority: **10.09.82 US 416442**

(43) Date of publication of application:
**25.04.84 Bulletin 84/17**

(45) Publication of the grant of the patent:
**26.04.89 Bulletin 89/17**

(84) Designated Contracting States:
**FR GB NL**

(56) References cited:
**DE-A-2 807 799**
**DE-A-2 925 052**

**LASER FOCUS, vol. 17, no. 10, October 1981,
pages 129-134, Newton, Massachusetts, US;
J.C. WILLIAMS et al.: "An engineering guide to
couplers"**

(73) Proprietor: **ALCATEL N.V.**
**Strawinskylaan 537 (World Trade Center)
NL-1077 XX Amsterdam (NL)**

(72) Inventor: **Hoffman, Arthur James
5404 Deer Park Dr., N.W.
Roanoke Virginia (US)**

(74) Representative: **Graf, Georg Hugo, Dipl.-Ing.
et al
Standard Elektrik Lorenz AG Patent- und
Lizenzwesen Postfach 30 09 29
D-7000 Stuttgart 30 (DE)**

(56) References cited:
**DEUXIEME COLLOQUE EUROPEEN SUR LES
TRANSMISSIONS PAR FIBRES OPTIQUES,
27th-30th September 1976, Paris, FR, pages
257-260, Cables and Connections, part 2.,
Communication VIII. 4; D. KUNZE et al.:
"Jonction des cables à fibres optiques"**

## Description

The present invention relates to an arrangement for protecting an optical fiber coupler of a plurality of optical fibers according to the preambles of claims 1 and 2 and a method of manufacturing the same.

A coupler of this kind is known from LASER FOCUS, vol. 17, no 10, October 1981, pages 129 134.

Such optical fiber couplers are in widespread use, especially in the telecommunications field and render it possible to interconnect individual optical fibers in such a manner that the modulated light propagating through an input optical fiber leading to the optical fiber coupler continues to propagate through at least one output optical fiber leading from the optical fiber coupler after passing through the latter. In some of the conventional optical fiber coupler constructions, at least two input optical fibers merge or are fused with one another at a coupling region of the optical fiber compler so that the output light signal or each of such output light signals is a combination or function of the input light signals. The present invention is primarily, but not exclusively, concerned with optical fiber couplers of the latter type, that is, with optical fiber couplers in which mixing of the input light signals takes place.

Optical fiber couplers of the above-discussed type are very sensitive to environmental influences not only because they are made of an optical material, usually glass, which is very fragile, but also because the coupling region and its vicinity are usually bare, that is, not provided with a jacket, so that environmental influences could affect the quality of the optical material of the optical fiber coupler and/or of the signals transmitted through the coupler, lest the exposed or bare region of the optical fiber coupler is protected from environmental influences.

In view of the above, it has been already proposed to encase the optical fiber coupler in such a manner as to protect the exposed region from deleterious environmental influences. However, experience with conventional constructions of such coupler-protecting arrangements has shown that they leave much to be desired as far as the protecting function thereof is concerned, especially in a use where the optical fiber coupler and the protective arrangement therefor are often subjected to extremely high or extremely low temperatures and/or very high temperature variations in relatively short periods of time, and/or to vibrations or impacts of considerable magnitudes. Thus, it has been observed that the failure or breakage rate of optical fiber couplers encased in the conventional ways is very high, which presents a severe limitation to the use of conventionally encased optical fiber couplers in communication applications.

It is an object of the present invention to so construct the protective arrangement of the type here under consideration as to reduce the possibility of damage to the optical fiber coupler to a minimum even under extreme conditions and to so design the protective arrangements of the above type as to be simple in construction, inexpensive to manufacture, easy to use, and reliable in operation nevertheless.

A concomitant object of the present invention is to devise a method of manufacturing the optical fiber coupler protecting arrangement of the above-type in a simple and rather inexpensive way.

In pursuance of this object which will become apparent hereafter, one feature of the present invention resides in a arrangements for protecting an optical fiber coupler of an optical material which can be damaged if exposed to environmental influences as characterised in claims 1 and 2.

The method according the present invention of manufacturing a protecting arrangement for an optical fiber coupler of a plurality of optical fibres comprises the steps of providing a trough-shaped support element with an open channel; placing the coupler into the open channel; adhesively attaching the coupler to the support element in the open channel; surrounding the support element with a tubular shielding element of a shrinkable material; shrinking the shielding element around the trough-shaped support element to form a subassembly; inserting the subassembly with clearance into a receiving channel of a housing member; sealing the open ends of the tubular shielding element around the coupler with respective seals which are so dimensioned as to simultaneously delimit a receiving space in the clearance between the shielding element and the housing member; substantially filling the receiving space with a body of hardenable material to embed the subassembly; and causing the hardenable material to harden.

Above-mentioned and other features and objects of this invention will become more apparent by reference to the following description taken in conjunction with the accompanying drawing, in which:

Fig. 1 is a bottom plan view of a subassembly of an optical fiber coupler with a V-shaped support element and an additional strip-shaped support element;

Fig. 2 is a top plan view of a package including the subassembly of Fig. 1 received in a receiving channel of a housing member, prior to embedding; and

Fig. 3 is a cross-sectional view taken along line III-III of Fig. 2 but subsequent to embedding.

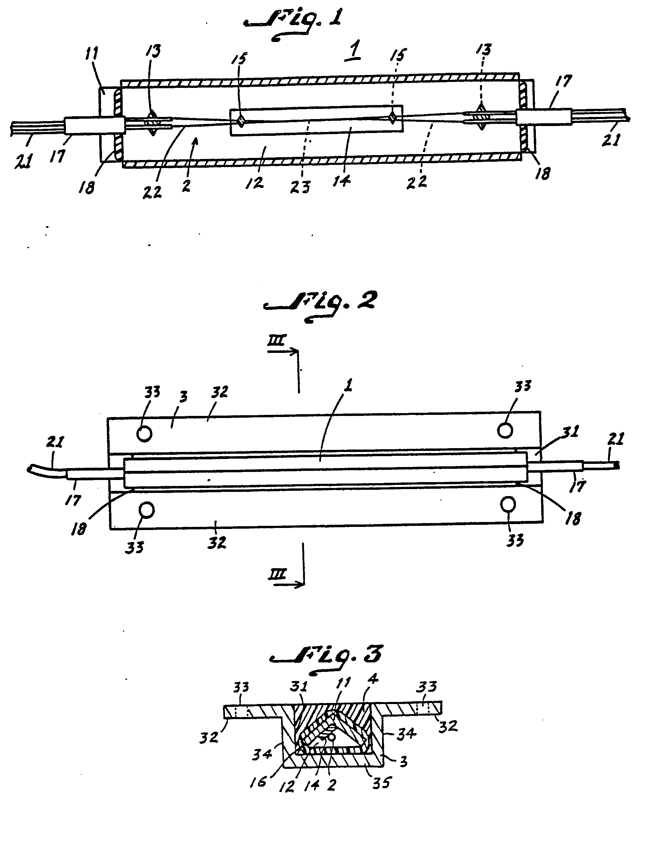

Referring now to the drawing in detail, and first to Fig. 1 thereof, it may be seen that the reference numeral 1 has been used to identify a protective arrangement or subassembly for an optical fiber coupler 2. The arrangement 1 includes, as one of its main components, a trough-shaped support element 11 which is preferably V-shaped in cross section to bound a substantially cross-sectionally triangular open channel 12 receiving a portion of the optical fiber coupler 2. The optical fiber coupler 2 includes respective jacketed input and output portions 21 which are partially received in the open channel 12 of the support element 11. The optical fiber coupler 2 then continues in the axial direction of the open channel 12 by stripped or bare portions 22 which then taper toward and are joined to one another at a merger or coupling region 23. The optical fiber coupler 2 is held in position in the open channel 12 by two bodies 13 of an adhesive, advantageously a heat-cured epoxy adhesive, which are situated at two locations that are spaced from one another longitudinally of the open channel 12 and each of which secures one of the jacketed portion 21 of the optical fiber coupler 2 to the V-shaped or trough-shaped support element 11.

The support element 11 is made of material having a coefficient of thermal expansion close to that of the optical material of the optical fiber coupler 2. Various metallic material especially iron-nickel alloys, satisfy this condition. One metallic material which is especially suited for this purpose and which has been successfully tested is currently being marketed under the trademark Invar. This material is an iron-nickel alloy containing about 64 percent of iron and 36 percent of nickel. However, other metallic materials, especially of the iron-nickel alloy family, are contemplated for use to make the trough-shaped support element 11 therefrom so long as the coefficient of thermal expansion is close to if not identical to that of an optical material of the optical fiber coupler 2. It will be appreciated that it may be desirable if not necessary to use different metallic materials for trough-shaped support elements 11 used with optical fiber couplers 2 of drastically different thermal expansion coefficients but, since there is no requirement for the thermal expansion coefficients of the materials of the support element 11 of the optical fiber coupler to be exactly equal, there is a certain leeway in selecting the materials, in fact, the same material may be used for optical fiber couplers 2 having thermal expansion coefficients within a relatively wide range.

As also shown in Fig. 1, the arrangement 1 may further include a strip-shaped support element 14 which extends along the bare portions 22 and the coupling region 23 of the optical fiber coupler 2, being connected to the bare portions 22 at two zones spaced from one another in the axial direction and situated outside the coupling region 23 and between the locations 13. The connection of the strip-shaped support element 14 to the bare portions 22 is accomplished by respective bodies of adhesive 15 situated at the respective zones. The adhesive may again be heat-curable epoxy and the material of the strip-shaped support element 14 has similar properties as the material of the trough-shaped support element 11 or may even be identical therewith. The strip-shaped support element 14 serves to reinforce the coupling region 23 of the optical fiber coupler 2 prior to and during the introduction of the optical fiber coupler 2 into the open channel 12 of the trough-shaped support element 11, and confines the coupling region 23 of the optical fiber coupler 2 between itself and the support element 11 upon assembly. However, the strip-shaped support element 14 is optional and may be omitted when the space available in the open channel 12 is sufficient for securing the bare fibers of the optical fiber coupler 2 directly to the trough-shaped support element 11.

As a comparison of Figs. 1 and 3 will reveal, a tubular shielding element 16 surrounds the trough-shaped support element 11 over most if not all of the axial length of the latter. At least as applied to the trough-shaped support element 11, the tubular shielding element 16 has a non-circular cross section which, as may be seen in Fig. 3, conforms to the outline of the trough-shaped support element 11 except for a portion of the shielding element 16 which spans the open side of the open channel 12, that is, extends across the open side of the channel 12. It is currently preferred to make the shielding element 16 of a shrinkable material, and to shrink the same in place so as to obtain a tight contact between the external surfaces of the trough-shaped support element 11 and the internal surface of the shielding element 16.

It may also be seen in Fig. 1 that a region of each of the jacketed portions 21 of the optical fiber coupler 2 is surrounded, in each instance, by a tubular bend limiter 17. The bend limiter 17 is preferably also of a shrinkable material and is shrunk in place on the respective jacketed portion 21 of the optical fiber coupler 2. The respective bend limiter 17 is shown to extend from the interior of the tubular shielding element 16 to beyond the trough-shaped support element 11. It reinforces the optical fiber coupler 2 in this area and limits the extent of bending of the optical fiber coupler 2.

Since the shielding element 16 spans the open side of the channel 12, a gap exists between the shielding element 16 and the bend limiter 17 at each of the ends of the shielding element 16. This gap is shown in Fig. 1 to be filled with a seal 18, especially by a body of an RTV sealent, which separates the interior of the shielding element 16 from its exterior. Thus, ambient air is prevented from entering the interior of the shielding element 16 and thus the bare fiber portions 22 and the coupling region 23 of the optical fiber couplers 2. If desired, either the shielding element 16 or the seals 18, or both, may be of an opaque material, so that even ambient light is prevented from reaching the bare optical fibers of the optical fiber coupler 2 therethrough.

The arrangement as discussed so far already gives optical fiber couplers a measure of protection which may be sufficient for certain applications or uses of the optical fiber coupler 2. However, for more demanding applications, such as those encountered especially in the military use, an additional protection may be needed. Thus, as shown in Figs. 2 and 3, the above-discussed protective arrangement 1 assembled with the optical fiber coupler 2 is used as a sub-package which is inserted into a receiving channel 31 of a housing member 3. As may best be seen in Fig. 3, the housing 3 has two lateral portions 32 which are shown to be configured as flanges. The lateral portions 32 are provided with holes 33 through which screws or similar fasteners may be passed to mount the housing 3 on a supporting structure. However, it will be appreciated that the lateral portions 32 could also extend over the entire height of the housing 3 for additional reinforcement purposes.

As illustrated in Fig. 3, the housing 3 has two lateral walls 34 and a bottom or interconnecting wall 35 extending between and merging with the lateral wall 34. The walls 34 and 35 together bound the receiving channel 31. Fig. 3 also shows that the trough-shaped or V-shaped support element 11 is so received in the receiving channel 31 that the open side of the channel 12 thereof faces downwardly, that is, toward the interconnecting wall 35. Of course, the portion of the shielding element 16 which spans the open side of the open channel 12 is interposed between the support element 11 and the bottom wall 35 of the housing member 3. Then, the entire subpackage is encased in a body 4 of an encapsulant especially of a resilient, opaque and encapsulant.

The body 4 may fill the entire remainder of the receiving channel 31 left after the above-mentioned sub-package has been introduced into the receiving channel 31, in which case the seals 18 prevent the encapsulating material from entering the interior of the tubular shielding element 16. Alternatively, as shown in Fig. 2, the seals 18 may have portions which are so dimensioned as to sealingly contact the surfaces bounding the receiving channel 31, thus axially delimiting a receiving space substantially coextensive with the shielding element 16 in the receiving channel 31. In this case, only the aforementioned receiving space need be filled with the encapsulant.

Having so described the construction of the protecting arrangement or package for the optical fiber coupler 2, the currently preferred method of manufacturing the same will now be briefly discussed. If the strip-shaped support element 14 is to be used, it is attached to the bare portion 22 of the optical fiber coupler 2 by the respective adhesive bodies 15 situated just outside the tapering or coupling region 23 of the optical fiber coupler 2 first, followed by hardening of the bodies 15 of adhesive. This hardening may be caused or accelerated by applying heat to the adhesive bodies 15 or to the strip-shaped support element 14, or both, such as by using a heat gun or a heated fixture. Then, the resulting article is introduced into the open channel 12 of the trough-shaped support element 11 and is secured therein by the respective bodies 13 of adhesive. This adhesive may again be cured, or its curing may be accelerated, by applying heat to the zones at which the bodies 13 are situated, by a heat gun or a heated structure. Once this is accomplished, the shielding element 16 of a shrinkable material is slid over the trough-shaped support element 11 and is shrunk in the desired position. This is followed by situating the bent limiters 17 at the desired locations, and by causing the same to shrink to tightly embrace the jacketed portions 21 of the optical fiber coupler 2. This is followed by filling the gaps between the shielding element 16 and the bent limiters 17 by the seals 18.

The resulting sub-assembly or sub-package 1 is then introduced into the receiving channel 31 of the housing member 3 in the above-mentioned orientation, and is properly aligned therein. Then, a body of the encapsulate, which is then in its flowable state, is poured into the receiving channel 31 or into the receiving space until it fills the receiving channel 31 or the receiving space. Then, the body 4 is permitted or caused to cure within the confines of the receiving channel 31. This completes the manufacture of the heavy-duty construction of the optical fiber coupler/protective arrangement article, which is then ready for storage, transportation and/or use.

## Claims

1. Arrangement for protecting an optical fiber coupler of a plurality of optical fibers comprising at least one elongated support element (11) extending along the coupler (2) and having a coefficient of thermal expansion close to that of the optical material of the coupler (2) and having a substantially trough-shaped configuration with a substantially V-shaped cross section so as to bound an open channel (12), means (13), including respective bodies of an adhesive, for attaching the coupler (2) to said support element (11) at least at two locations spaced from one another longitudinally of said support element (11) characterized in that there is provided further a tubular shielding element (16) surrounding at least that part of said trough-shaped support element (11) which extends between said two locations and being in tight contact with the exterior of said part of said trough-shaped support element (11) and extending across said open channel (12) and being of a shrinkable material and being shrunk in place to obtain said tight contact and having two longitudinally spaced end portions; and further characterised by means for sealingly closing said end portions, including seals (18) extending at least inwardly from said end portions.

2. Arrangement for protecting an optical fiber coupler of a plurality of optical fibers comprising at least one elongated support element (11) extending along the coupler (2) and having a coefficient of thermal expansion close to that of the optical material of the coupler (2) and having a substantially trough-shaped configuration with a substantially V-shaped cross section so as to bound an open channel (12), means (13), including respective bodies of an adhesive, for attaching the coupler (2) to said support element (11) at least at two locations spaced from one another longitudinally of said support element (11) characterized in that there is provided further an additional support element (14) of a strip-shaped configuration extending along the coupler (2) and having a shorter length than said support element (11), and means for securing said additional support element to the coupler (2) at least at two zones spaced a smaller distance from one another than said two locations and wherein said zones are situated outside a coupling region (23) between the coupler's optical fibres and between said locations upon assembly and wherein said securing means includes respective bodies (15) of an adhesive substance at said zones.

3. An arrangement as defined in claim 2, characterized in that there is provided further a tubular shielding element (16) surrounding at least that part of said trough-shaped support element (11) which extends between said two locations.

4. An arrangement as defined in claim 3, characterized in that the shielding element (16) is in tight contact with the exterior of said Part of said trough-shaped support element (11) and extends across said open channel (12) and is of a shrinkable material and is shrunk in place to obtain said tight contact and has two longitudinally spaced end portions; and further comprising means for sealingly closing said end portions, including seals (18) extending at least inwardly from said end portions.

5. An arrangement as defined in claim 1 or 4, characterized in that there is provided further a pair of tubular bend limiters (17), preventing abrupt bends in the coupler's optical fibers, each snugly surrounding the coupler (2) at the region of one of said end portions of said tubular shielding element (16) and wherein each of said bend limiters (17) is of a shrinkable material and is shrunk in place on the coupler (2) and wherein said seals (18) sealingly engage said bend limiters (17).

6. An arrangement as defined in any one of the preceding claims, characterized in that further means are provided for encasing said support element (11) and at least that portion of the coupler (2) which is coextensive with the latter, including a rigid housing member (3) bounding a receiving channel (31) dimensioned to receive said support element and said part of the coupler (2) with a clearance, and a body (4) of filling material substantially filling said clearance.

7. An arrangement as defined in claim 6, characterized in that the housing member (3) includes two lateral walls (34) and an interconnecting wall (35) interconnecting said lateral walls and bounding said receiving channel (31) therewith; and wherein said trough-shaped support member (11) is so oriented in said receiving channel (31) that the open side of said open channel (12) faces said interconnecting wall (35).

8. An arrangement as defined in claim 6 or 7 when claim 6 is dependent upon claims 1 or 4, characterized in that the seals (18) arranged at and closing the open end portions of the shielding element have outer dimensions substantially corresponding to those of said receiving channel (31) to be fittingly received therein and to delimit a receiving space for said body (4) of filling material.

9. An arrangement as defined in any one of the preceding claims, characterized in that the support element (11) is of a metallic material and that at least that portion of the coupler (2) which extends between said two locations is received in said open channel (12).

10. A method of manufacturing a protecting arrangement for an optical fiber coupler of a plurality of optical fibers comprising the steps of:
providing a trough-shaped support element with an open channel;
placing the coupler into the open channel;
adhesively attaching the coupler to the support element in the open channel;
surrounding the support element with a tubular shielding element of a shrinkable material;
shrinking the shielding element around said trough-shaped element to form a subassembly;
inserting the subassembly with clearance into a receiving channel of a housing member;
sealing the open ends of the tubular shielding element around the coupler with respective seals which are so dimensioned as to simultaneously delimit a receiving space in the clearance between the shielding element and the housing member;
substantially filling the receiving space with a body of a hardenable material to embed the subassembly; and
causing the hardenable material to harden.

**Patentansprüche**

1. Anordnung zum Schutz eines optischen Faserkopplers bestehend aus einer Vielzahl optischer Fasern mit mindestens einem länglichen Stützelement (11), das sich längs des Kopplers (2) erstreckt, das einen thermischen Ausdehnungskoeffizienten hat, der nahe bei dem des optischen Materials des Kopplers (2) liegt, und das eine im wesentlichen muldenförmige Gestalt mit einem im wesentlichen V-förmigen Querschnitt hat, um so einen offenen Kanal (12) zu begrenzen, und mit Mitteln (13), einschließlich jeweiliger Mengen eines Klebers, zum Befestigen des Kopplers (2) an dem Stützelement (11) an mindestens zwei Stellen, die voneinander in Längsrichtung des Stützelements (11) entfernt sind, dadurch gekennzeichnet, daß zusätzlich ein röhrenförmiges Schutzelement (16) vorhanden ist, das zumindest den Teil des muldenförmigen Stützelements (11) umgibt, der zwischen den beiden Stellen liegt, das in engem Kontakt mit dem Äußeren des Teils des muldenförmigen Stützelements (11) ist und sich über den offenen Kanal (12) erstreckt, das aus einem schrumpfbaren Material besteht und am Ort geschrumpft ist, um den engen Kontakt herzustellen, und das zwei in Längsrichtung auseinanderliegende Endstücke aufweist; und ferner gekennzeichnet durch Mittel einschließlich Siegel (18), die sich von den Endstücken aus mindestens nach innen erstrecken, zum Verschließen der Endstücke durch Versiegeln.

2. Anordnung zum Schutz eines optischen Faserkopplers bestehend aus einer Vielzahl optischer Fasern mit mindestens einem länglichen Stützelement (11), das sich längs des Kopplers (2) erstreckt, das einen thermischen Ausdehnungskoeffizienten hat, der nahe bei dem des optischen Materials des Kopplers (2) liegt, und das eine im wesentlichen muldenförmige Gestalt mit einem im wesentlichen V-förmigen Querschnitt hat, um so einen offenen Kanal (12) zu begrenzen, und mit Mitteln (13), einschließlich jeweiliger Mengen eines Klebers, zum Befestigen des Kopplers (2) an dem Stützelement (11) an mindestens zwei Stellen, die voneinander in Längsrichtung des Stützelements (11) entfernt sind, dadurch gekennzeichnet, daß zusätzlich ein weiteres Stützelement (14) mit streifenförmiger Gestalt vorhanden ist, das sich längs des Kopplers (2) erstreckt und eine kürzere Länge hat als das Stützelement (11), und daß Mittel vorhanden sind zum Festmachen des weiteren Stützelements (14) am Koppler (2) in mindestens zwei Bereichen, die voneinander eine kleinere Strecke auseinanderliegen als die zwei Stellen, wobei die Bereiche bei der Montage außerhalb einer Koppelzone (23) zwischen den optischen Fasern und zwischen den Stellen liegen und wobei die Mittel zum Festmachen jeweils Mengen (15) einer klebenden Substanz in diesen Bereichen einschließen.

3. Anordnung nach Anspruch 2, dadurch gekennzeichnet, daß zusätzlich ein röhrenförmiges Schutzelement (16) vorhanden ist, das zumindest den Teil des muldenförmigen Stützelements (11) umgibt, der zwischen den beiden Stellen liegt.

4. Anordnung nach Anspruch 3, dadurch gekennzeichnet, daß das Schutzelement (16) in engem Kontakt mit dem Äußeren des Teils des muldenförmigen Stützelements (11) ist und sich über den offenen Kanal (12) erstreckt, das aus einem schrumpfbaren Material besteht und am Ort geschrumpft ist, um den engen Kontakt herzustellen, und das zwei in Längsrichtung auseinanderliegende Endstücke aufweist; und ferner enthaltend Mittel einschließlich Siegel (18), die sich von den Endstücken aus mindestens nach innen erstrecken, zum Verschließen der Endstücke durch Versiegeln.

5. Anordnung nach Anspruch 1 oder 4, dadurch gekennzeichnet, daß zusätzlich ein Paar Knickschutztüllen (17) vorhanden sind, die die optischen Fasern des Kopplers vor scharfen Knicken schützen, von denen jede den Koppler (2) im Bereich eines Endstückes des röhrenförmigen Schutzelements (16) eng umgibt, und wobei jede Knickschutztülle (17) aus einem schrumpfbaren Material besteht und am Ort auf den Koppler (2) geschrumpft ist, und wobei die Siegel (18) die Knickschutztüllen (17) versiegelnd umfassen.

6. Anordnung nach einem der vorhergehenden Ansprüche, dadurch gekennzeichnet, daß weitere Mittel zum Einschließen des Stützelements (11) und zumindest des Teils des Kopplers (2) vorhanden sind, der sich im selben Bereich wie letzteres erstreckt, mit einem starren Gehäuse (3), das einen aufnehmenden Kanal (31) begrenzt und zur Aufnahme des Stützelements und des Teils des Kopplers (2) mit Spiel dimensioniert ist, und mit einer Menge (4) eines Füllmaterials, das das Spiel im wesentlichen ausfüllt.

7. Anordnung nach Anspruch 6, dadurch gekennzeichnet, daß das Gehäuse (3) zwei Seitenwände (34) und eine verbindende Wand (35), die die Seitenwände verbindet, enthält und damit den aufnehmenden Kanal (31) begrenzt; und wobei das muldenförmige Stützelement (11) in dem aufnehmenden Kanal (31) so orientiert ist, daß die offene Seite des offenen Kanals (12) der verbindenden Wand (35) gegenüberliegt.

8. Anordnung nach Anspruch 6 oder 7, wenn Anspruch 6 sich auf die Ansprüche 1 oder 4 bezieht, dadurch gekennzeichnet, daß die Siegel (18), die an den Endstücken des Schutzelements angeordnet sind und diese verschließen, Außenabmessungen haben, die im wesentlichen denen des aufnehmenden Kanals (31) entsprechen, um darin passend aufgenommen zu werden und einen die Menge (4) des Füllmaterials aufnehmenden Raum abzugrenzen.

9. Anordnung nach einem der vorhergehenden Ansprüche, dadurch gekennzeichnet, daß das Stützelement (11) aus einem metallischen Material besteht und daß zumindest der Teil des Kopplers (2), der sich zwischen den beiden Stellen erstreckt, von dem offenen Kanal (12) aufgenommen ist.

10. Verfahren zur Herstellung einer Anordnung zum Schutz eines optischen Faserkopplers bestehend aus einer Vielzahl optischer Fasern mit den Schritten
— ein muldenförmiges Stützelement mit einem offenen Kanal vorsehen,
— den Koppler in den offenen Kanal legen,
— den Koppler im offenen Kanal am Stützelement klebend befestigen,
— das Stützelement mit einem röhrenförmigen Schutzelement aus einem schrumpfbaren Material umgeben,
— das Schutzelement um das muldenförmige Element schrumpfen, um eine Untereinheit zu bilden,
— die Untereinheit mit Spiel in einen aufnehmenden Kanal eines Gehäuses einführen,
— die offenen Enden des röhrenförmigen, den Koppler umgebenden Schutzelements mit jeweils einem Siegel versiegeln, die so dimensioniert sind, daß sie gleichzeitig einen aufnehmenden Raum mit dem Spiel zwischen dem Schutzelement und dem Gehäuse abgrenzen,
— den aufnehmenden Raum im wesentlichen mit einer Menge eines aushärtbaren Materials füllen, um die Untereinheit einzubetten und
— das aushärtbare Material aushärten lassen.

**Revendications**

1. Agencement pour la protection d'un coupleur de fibres optiques pour plusieurs fibres optiques comprenant au moins un élément de support allongé (11) s'étenant le long du coupleur (2), ayant un coefficient de dilatation thermique proche de celui du matériau optique du coupleur (2) et ayant une configuration sensiblement en forme d'auge, de section sensiblement en forme de V délimitant un canal ouvert (12), ainsi que des moyens (13), incluant des corps respectifs de matériau adhésif, pour la fixation du coupleur (2) audit élément de support (11) en au moins deux emplacements longitudinalement espacés l'un de l'autre dudit élément de support (11), caractérisé en ce que, en outre, il est prévu un élément d'écran tubulaire (16), entourant au moins la partie dudit élément de support en forme d'auge (11) qui s'étend entre lesdits deux emplacements, cet élément d'écran étant en contact étroit avec l'extérieur de ladite partie de l'élément de support en forme d'auge (11) et s'étendant au travers dudit canal ouvert (12), cet élément d'écran étant enfin fait d'un matériau rétractable et ayant deux parties d'extrémité longitudinalement espacées, ledit agencement étant par surcroît caractérisé par des moyens refermant de façon étanche lesdits parties d'extrémités, incluant des joints (18) s'étendant au mons vers l'intérieur depuis lesdites parties d'extrémités.

2. Agencement pour la protection d'un coupleur de fibres optiques pour plusieurs fibrs optiques comprenant au moins un élément de support allongé (11) s'étendant le long du coupleur (2), ayant un coefficient de dilatation thermique proche de celui du matériau optique du coupleur (2) et ayant une configuration sensiblement en forme d'auge, de section sensiblement en forme de V délimitant un canal ouvert (12), ainsi que des moyens (13), incluant des corps respectifs de matériau adhésif, pour la fixation du coupleur (2) audit élément de support (11) en au moins deux emplacements longitudinalement espacés l'un de l'autre dudit élément de support (11), caractérisé en ce que, en outre, il est prévu un élément de support additionel (14) ayant la forme d'une bande s'étendant le long du coupleur (2) et ayant une longueur plus courte que celle dudit élément de support (11), ainsi que des moyens pour la fixation dudit élément de support additionnel au coupleur (2) au moins en deux zones espacées l'une de l'autre d'une distance plus courte que lesdits deux emplacements, lesdites zones étant situées en dehors d'une région de couplage (23) entre les fibres optiques du coupleur et entre lesdits emplacements, après assemblage, et lesdits moyens de fixation incluant des corps respectifs (15) d'une substance adhésive dans lesdites zones.

3. Agencement conforme à la revendication 2, caractérisé en ce qu'il est en outre prévu un élément d'écran tubulaire (16) entourant au moins la partie dudit élément de support en forme d'auge (11) qui s'étend entre desdits deux emplacements.

4. Agencement conforme à la revendication 3, carctérisé en ce que l'élément d'écran (16) est en contact étroit avec l'extérieur de ladite partie dudit élément de support en forme d'auge (11), il s'étend en travers dudit canal ouvert (12), il est est en un matériau rétractable, il est rétracté sur place afin d'obtenir ledit contract étroit et il possède deux parties terminales longitudinalement espacées, et en ce que ledit agencement comprend en outre des moyens pour refermer lesdites parties terminales, incluant des joints (18) s'étendant au moins vers l'intérieur à partir desdites parties terminales.

5. Agencement conforme à la revendication 1 ou 4, caractérisé en ce qu'il est en outre prévu une paire de limiteurs de courbure tubulaires (17), empêchant des courbures abruptes des fibres optiques du coupleur, chacune entourant le coupleur (2) dans la zone de l'une desdites parties d'extrémité dudit élément d'écran tubulaire (16) et en ce que chacun desdits limiteurs de courbure (17 est en un matériau rétractable et est rétracté sur place sur le coupleur (2), lesdits joints (18) s'engageant de façon étanche sur lesdits limiteurs de courbure (17).

6. Agencement conforme à l'une quelconque des revendications qui prècèdent, caractérisé en ce qu'il est prévu des moyens additionnels pour contenir ledit élément de support (11) et au moins la partie du coupleur (2) coextensive à ce dernier, incluant une portion de boîtier rigide (3) délimitant un canal de réception (31), dimensionné pour recevoir ledit élément de support et ladite partie du coupleur (2) avec un vide, ainsi qu'un corps (4) de matériau de remplissage remplissant sensiblement ledit vide.

7. Agencement conforme à la revendication 6, carctérisé en ce que la portion de boîtier (3) comporte deux parois latérales (34) et une paroi d'interconnexion (35) interconnectant lesdites parois latérales et délimitant avec celles-ci ledit canal de réception (31) et en ce que ledit élément de support en forme d'auge (11) est orienté dans ledit canal de réception de façon que le côté ouvert dudit canal ouvert (12) soit tourné vers ladite paroi d'interconnexion (35).

8. Agencement conforme à la revendication 6 ou 7, dans la mesure où la revendication 6 est dépendante des revendications 1 ou 4, caractérisé en ce que les joints (18) disposés à et refermant les parties d'extrémité ouvertes de l'élément d'écran ont des dimensions extérieures correspondant sensiblement à celles dudit canal de réception (31) afin d'y être reçu avec serrage et de délimiter un espace de réception pour ledit corps (4) de matériau de remplissage.

9. Agencement conforme à l'une quelconque des revendications qui précèdent, caractérisé en ce que l'élément de support (11) est fait d'un matériau métallique et en ce que au moins la partie du coupleur (2) qui s'étend entre lesdits deux emplacements est reçue dans ledit canal ouvert (12).

10. Procédé de fabrication d'un agencement de protection pour un coupleur de fibres optiques pour plusieurs fibres optiques comprenant les étapes suivantes:

— fournir un élément de support en forme d'auge ayant un canal ouvert,

— placer le coupleur dans le canal ouvert,

— fixer par adhésif le coupleur à l'élément de support dans ledit canal ouvert,

— entourer l'élément de support d'un élément d'écran tubulaire en matériau rétractable,

— rétracter l'élément d'écran autour dudit élément de support en forme d'auge afin de former un sous-ensemble,

— insérer ledit sous-ensemble avec un vide dans un canal de réception d'une portion de boîtier,

— sceller les extrémités ouvertes de l'élément d'écran tubulaire autour du coupleur à l'aide de joints respectifs qui sont dimensionnés de façon à délimiter simultanément un espace de réception dans le vide entre l'élément d'écran et la portion de boîtier,

— sensiblement remplir l'espace de réception par un corps de matériau durcissable noyant le sous-ensemble, et

— faire durcir le matériau durcissable.

_Fig. 1_

_Fig. 2_

_Fig. 3_